# EUROPÄISCHE PATENTANMELDUNG

(11) **EP 4 079 150 A1**
(43) Veröffentlichungstag der Anmeldung: **26.10.2022**
(21) Anmeldenummer: 22161003.3
(22) Anmeldetag: 09.03.2022
(51) Int. Cl.: A01K 59/04, B04B 7/00

(54) **HONIGSCHLEUDER**

(30) Priorität: 22.04.2021 DE 102021002123
(71) Anmelder: Groschopp AG Drives & More, 41747 Viersen (DE)
(72) Erfinder: Klupp, Alexander, 41812 Erkelenz (DE)
(74) Vertreter: Cohausz & Florack

(57) **Zusammenfassung**

Die Erfindung bezieht sich auf eine Honigschleuder mit einem Behälter(2), in dem ein drehbarer Korb (3) mit Aufnahmen (4) für Honigwaben und einer Rotationsachse (6) in Drehung versetzbar ist, wobei jede Aufnahme (4, 4.1, 4.2) einen Aufnahmeraum (5) aufweist, drehgelagert ist und je nach Drehrichtung des Korbes (3) in zwei Richtungen schwenkbar ist, und der Behälter (2) eine Auslassöffnung (12) aufweist, aus der der ausgeschleuderte gewonnene Honig entnehmbar ist,
und wobei die Honigschleuder einem Antrieb (8) für die Rotation des Korbes (3) aufweist. Um die Größe von Honigschleudern zu verringern, ist
vorgesehen, dass die Rotationsachse (10.1) der Aufnahmen (4, 4.1) durch den Aufnahmeraum (5) der Aufnahmen (4, 4.1) verläuft.

## Beschreibung

Die Erfindung betrifft eine Honigschleuder mit einem Behälter, in dem ein drehbarer Korb mit Aufnahmen für Honigwaben und einer Rotationsachse in Drehung versetzbar ist, wobei jede Aufnahme einen Aufnahmeraum aufweist, drehgelagert ist und je nach Drehrichtung des Korbes in zwei Richtungen schwenkbar ist, und der Behälter eine Auslassöffnung aufweist, aus der der ausgeschleuderte gewonnene Honig entnehmbar ist
und wobei die Honigschleuder einem Antrieb für die Rotation des Korbes aufweist.

Honigschleudern werden von unterschiedlichsten Herstellern in verschiedenen Ausführungsformen vertrieben und sind bekannt. Der Behälter ist in der Regel ein zylindrischer Topf aus Edelstahl mit einem Außendurchmesser zwischen 400 und 1000 mm. Darin befinden sich wenigstens ein sogenannter Korb, der Aufnahmen für eine oder mehrere Waben aufweist.

Unter dem Begriff Wabe wird hier die Honigwabe mit ihren Wabenzellen in einem sogenannten Rähmchen verstanden, die der Beute (Bienenstockbehausung) entnommen wurde. Die Rähmchen sind in der Regel aus Holz mit Kantenlängen zwischen 150 und 450 mm und können in der Beute beispielsweise mit weiteren Rähmchen eingesetzt werden. Bienen bauen das Rähmchen mit Hilfe von Bienenwachs zu einer Wabe aus, die die bekannten sechseckigen Wabenzellen aufweisen.

Obwohl es auch manuelle Kurbelantriebe mit Freilauf gibt, bezieht sich diese Erfindung auf drehbar gelagerte Körbe, die vorzugsweise über einen Motor angetrieben werden. Ihre Rotationsachse ist in der Regel senkrecht.

Bei den Honigschleudern unterscheidet man im Wesentlichen
a) Tangentialschleudern
b) Radialschleudern und
c) Selbstwendeschleudern.

Bei den Tangentialschleudern werden die Waben tangential innerhalb des Korbes in eine Halterung eingebracht. Bei der Rotation des Korbes wird der Honig zunächst nur auf der der Behälterwand zugewandten Seite herausgeschleudert, bis die Wabe von Hand gewendet wird.

Bei der Radialschleuder befinden sich die Waben sternförmig in den Aufnahmen des Korbes und es werden durch die Fliehkräfte beide Seiten der Wabe, also der dort befindlichen Wabenzellen entleert. Dieses Verfahren ist aber anfällig für Wabenbrüche.

Bei der dritten Schleuder schwenkt jede Aufnahme des Korbes von einer radial ausgerichteten Ausgangsstellung je nach Drehrichtung des Korbes um eine Achse bis in eine zumindest nahezu tangentiale Stellung, so dass beide Seiten entleert werden können, wenn man die Drehrichtung des Korbes wechselt.

Zur Begriffserläuterung in dieser Anmeldung wird unter einer Aufnahme ein in der Regel käfigartiges Fach mit einer in der Regel nach oben hin offenen Einsetzöffnung für eine Wabe verstanden, und die Gesamtheit der Aufnahmen befinden sich an einem rotierbaren Korb. Ferner sei unter einer Rotationsachse eine Gerade verstanden, um die sich ein Korb oder eine Aufnahme drehen, während unter einer Drehachse die räumlich ausgebildete Achse oder Welle zu verstehen ist.

Diese Erfindung betrifft ausschließlich Selbstwendeschleudern.

Beim Ausschleudern von Honig kann es zu einem Bruch der Waben aufgrund von mechanischer Überlastung kommen. Insbesondere auf volle oder teilentleerte Waben wirken höhere Fliehkräfte. Daher wird die Honigschleuder anfangs in der Regel vorsichtig mit einer geringeren Drehzahl gefahren, die bei den modernsten Honigschleudern an einer Steuereinheit eingestellt werden kann. Wenn die Wabe nahezu entleert ist, wagt der Imker dann eine höhere Drehgeschwindigkeit. Bei den Selbstwendeschleudern ist die Wahl der Drehgeschwindigkeit noch anspruchsvoller.

Hinzu kommt, dass die Viskosität des Honigs und das Gewicht der Waben stark variieren kann, so dass Erfahrungswerte nicht unbedingt übertragbar sind.

Die Schwenkbewegungen der Aufnahmen, die dazu dienen, dass beide Seiten der Wabe der Behälterwand zugewendet werden können bzw. die Wabenzellen auf beiden Seiten der Wabe effektiv durch die Zentrifugalkraft aus der Drehung des Korbes geleert werden können, erfordert für die gleich Anzahl von Aufnahmen einen größeren Raum als dies bei den Tangentialschleudern der Fall ist.

In der Regel sind die Behälter zylinderförmig mit geringer Wandstärke aus Edelstahl oder Plexiglas. Wenn für eine Tangentialschleuder mit vier Aufnahmen ein Behälterinnendurchmesser von 430 mm notwendig ist, so ist bei einer Selbstwendeschleuder mit vier Aufnahmen bereits ein Innendurchmesser von über 600 mm, oft 690 mm Bedingung.

Bei dem Vorteil, die Waben wie in Tangentialschleudern nicht manuell umdrehen zu müssen, muss man bei Selbstwendeschleudern also den größeren Platzbedarf und Materialaufwand in Kauf nehmen.

Es ist deshalb Aufgabe der Erfindung, die Größe von Honigschleudern zu verringern.

In Bezug auf die Honigschleuder wird die Aufgabe durch die Merkmale des Anspruchs 1 und insbesondere dadurch gelöst, dass die Rotationsachse der Aufnahmen durch den Aufnahmeraum der Aufnahmen verläuft.

Im Stand der Technik sind die Rotationsachsen an einem Ende einer Aufnahme außerhalb des Aufnahmeraums durch eine senkrechte Drehachse am äußersten Rand des Korbes gebildet. Mit einer Rückstelleineinrichtung, die meist durch eine Feder gebildet ist, steht die Aufnahme mit ihrem Aufnahmeraum im Stillstand der Honigschleuder radial im Behälter. D. h., alle Aufnahmen bilden im Stillstand der Honigschleuder eine sternförmige Anordnung. Mit der Drehung des Korbes schwenkt die Aufnahme um die am Außenumfang des Korbes angebrachte Drehachse in eine tangentiale Position, um den Honig der Honigwabenzellen einer Wabenseite mit Hilfe der Zentrifugalkraft an die Behälterwand zu schleudern. Bei einer Drehrichtungsumkehr wird entsprechend die andere Wabenseite bedient.

Die Erfinder haben nun erkannt, dass der Schwenkradius der Aufnahmen sehr groß ist, wenn die Drehachse wie bislang am Ende einer Aufnahme außerhalb des Aufnahmeraums und dazu noch zwischen Aufnahme und Behälterinnenwand angeordnet ist. Durch die Verlegung der Rotationsachse durch den Aufnahmeraum, kann die Aufnahme bis dicht an die Behälterinnenwand heranreichen. Außerdem ist der Schwenkradius kleiner. Der Platzbedarf für die Schwenkbewegung der Aufnahmen wird dadurch deutlich geringer.

Um bei dem genannten Beispiel zu bleiben, so würde sich der Durchmesser des Behälters von 690 mm auf 660 mm verringern lassen, was zu einer erheblichen Materialeinsparung führt. Oder anders ausgedrückt, könnten in dem Behälter mit 690 mm Durchmesser statt vier bereits sechs schwenkbare Aufnahmen untergebracht werden, was die Produktionsmöglichkeiten in gleichem Zeitraum deutlich um 50% anhebt.

Mit Vorteil ist dafür gesorgt, dass sich ein Drehlager für die Aufnahme unterhalb des Aufnahmeraums befindet.

Damit wird das Einsetzen einer Wabe in den Aufnahmeraum der Aufnahme nicht durch eine Drehachse behindert.

Es ist bevorzugt, die Aufnahme zumindest teilweise in einer Hohlwelle unterzubringen.

Indem eine Aufnahme in eine aufgeschnittene Hohlwelle integriert wird, werden gleich zwei Vorteile erzielt. Zum einen kann die Rotationsachse durch die Hohlwelle verlaufen und somit in den Aufnahmeraum gerückt werden. Zum anderen wird die Aufnahme in ihrer zumindest zum Teil und bevorzugt im oberen Bereich durch die Hohlwelle gehalten.

Mit Vorteil ist vorgesehen, dass die Rotationsachse der Aufnahme von drei Seiten der Aufnahme wenigstens nahezu gleich weit entfernt ist.

In der Regel hat der Aufnahmeraum einen rechteckigen Querschnitt, wenn man von oben, also der Einsetzöffnung für eine Wabe in die Aufnahme schaut. Wenn die Rotationsachse von einer Stirnseite in etwa gleich weit entfernt ist wie von den Längsseiten, so nimmt die Aufnahme bei einem Schwenk den geringsten Bewegungsradius ein und es kann Raum eingespart werden.

Es ist bevorzugt, den Abstand von den zwei Rotationsachsen von zwei Aufnahmen kürzer vorzusehen als die Länge des Aufnahmeraums.

Dadurch ist die Schwenkbewegung der Aufnahmen bis zum Anschlag an die benachbarte Aufnahme begrenzt und es kommt zu einer kurzen Überlappung in Umfangsrichtung des Korbes, aber auch dadurch kann noch einmal Raum eingespart werden bzw. der Durchmesser des Behälters verkleinert werden. Um im vorangehenden Beispiel zu bleiben, könnten noch einmal zwei weitere Aufnahmen in die gleiche Behältergröße untergebracht werden. Die Überlappung der Aufnahmen ist im Randbereich nicht kritisch, da die Wabe dort ihr Rähmchen hat.

Mit Vorteil kann ein Ableitblech in einem Überlappungsbereich von zwei Aufnahmen vorgesehen sein.

Ein solches Ableitblech fängt den ausgeschleuderten Honig der Wabe auf, die sich in der weiter innen im Behälter liegenden Aufnahme befindet, und leitet den Honig in Richtung Auslassöffnung. Es kann an einer Aufnahme selbst befestigt sein. Auf diese Weise wird auch verhindert, dass der Honig dieser Wabe in die Rückseite der Wabe, die näher am Innenumfang des Behälters liegt erneut eingetragen wird.

Bevorzugt ist ein Sensor vorgesehen, dessen Messwerte Aufschluss über das Gewicht der Wabe geben.

Ein solcher Sensor kann beispielsweise ein Kraftsensor oder ein Messgeber hinsichtlich des Schwenkwinkels sein. Aus beiden Messergebnissen lassen sich Rückschlüsse auf das Wabengewicht machen und somit auf die im Schleuderprozess bereits erfolgte Entleerung der Wabe. So kann im richtigen Augenblick die Drehrichtung über den Antriebsmotor geändert werden, um auch die andere Seite der Wabe zu entleeren.

Im Folgenden soll die Erfindung anhand von Ausführungsbeispielen und vier Figuren weiter erläutert werden.

Dabei zeigen
Fig. 1 eine dreidimensionale Ansicht einer Selbstwendeschleuder gemäß der Erfindung,
Fig. 2 eine schematische Draufsicht auf eine Selbstwendeschleuder gemäß der Erfindung mit Vergleich zum Stand der Technik,
Fig. 3a und Fig. 3b eine Detaildraufsicht und eine Längsschnittdarstellung der Aufnahmenlagerung und
Fig. 4a und Fig 4b eine Detaildraufsicht auf die Bewegung der Aufnahmen mit Überlappung

Die in den Figuren gezeigten Ausführungsbeispiele beziehen sich auf Honigschleudern 1 der Kategorie Selbstwendeschleudern. Alle Merkmale der sind auf alle Darstellungen lesbar. In den Figuren beziehen sich unterschiedliche Ausführungsbeispiele nur auf eine unterschiedliche Anzahl der Aufnahmen 4, 4.1 für die Waben 20.

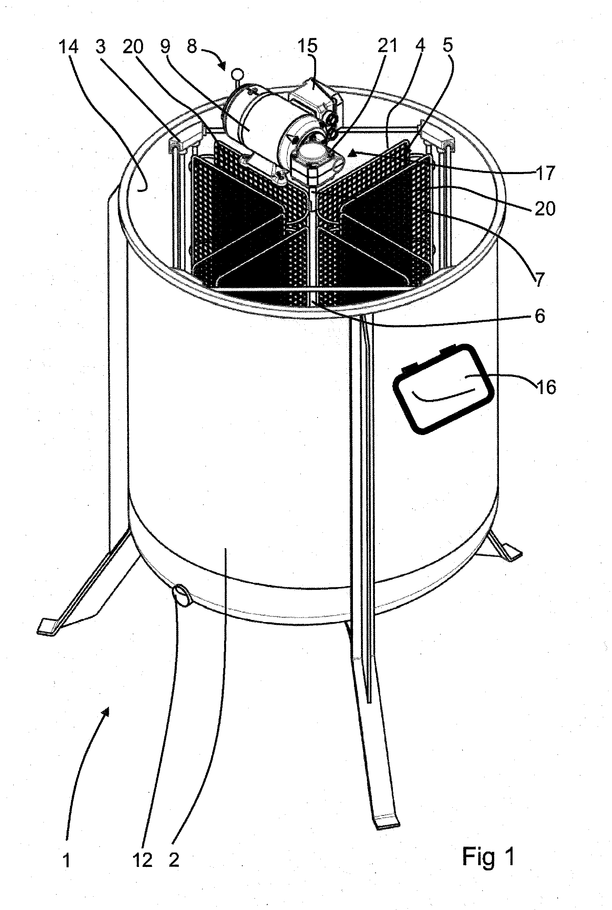

Um einen Überblick zu der erfindungsgemäßen Honigschleuder 1 zu erhalten, ist in Fig. 1 eine Selbstwendeschleuder mit vier Aufnahmen 4, 4.1 dreidimensional dargestellt. Aus Gründen der Übersichtlichkeit wurde der Deckel des Behälters 2 in der Fig. 1 weggelassen.

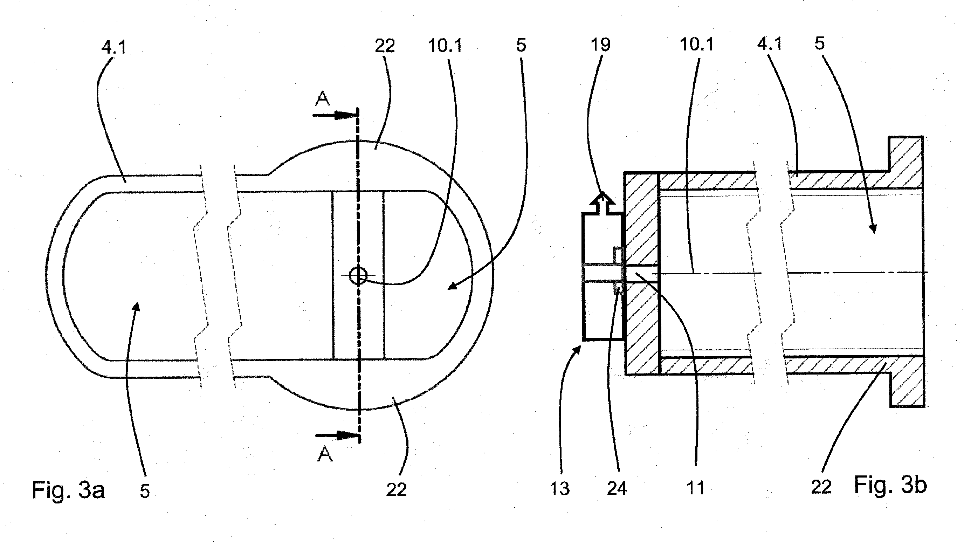

Im Inneren des Behälters ist ein drehbarer Korb 3 vorgesehen, der über einen Antrieb 8, der einen Motor 9 umfasst, in Rotation um die Rotationsachse 6 versetzt werden kann. An diesem Korb sind die Aufnahmen 4 vorzugsweise schwenkbar gelagert, so dass sie je nach Drehrichtung aufgrund der Zentrifugalkräfte eine andere Position einnehmen. Dabei befindet sich die Rotationsachse 10.1, 10.2 der Aufnahmen 4 näher an der Behälter-Innenwand 14 als an der Rotationsachse 6 des Korbs 3. Im Stillstand des Korbes 3 werden die Aufnahmen durch eine erst in Fig. 3 angedeutete Rückstelleineinrichtung 24 in die radiale Position im Korb 3 gebracht.

Die Aufnahmen 4 besitzen einen Aufnahmeraum 5 für Waben 20, die hier zur Vereinfachung schwarz dargestellt sind. Die Aufnahmen haben in diesem Ausführungsbeispiel eine Gitterstruktur, so dass Honig aus den Waben aufgrund von Zentrifugalkräften gegen die Behälter-Innenwand 14 herausgeschleudert werden kann, und zwar je nach Drehrichtung entweder von der ersten oder der zweiten Wabenseite.

Der Honig rinnt dann die Behälter-Innenwand 14 hinunter und kann aus der Auslassöffnung 12 entnommen werden. Verständlicherweise nimmt das Gewicht der Waben dabei ab, was Einfluss auf die die Belastung durch die Zentrifugalkraft auf die Wabe 20 selbst, als auch auf eine mögliche Unwucht des Korbes 3 hat.

Um das Gewicht der Waben während des Schleuderprozesses kontinuierlich zu überwachen, ist mindestens eine Messvorrichtung 17 vorgesehen, die Aufschluss über das Gewicht der Waben 20 gibt und diesen Messwert an eine Steuerungseinheit 15 des Antriebs 8 weitergibt, wodurch direkt steuerungstechnisch über den Motor 9 Einfluss auf die Drehzahl des Korbes genommen werden kann, um Schäden zu vermeiden. Man kann dementsprechend eine automatische Regelung der Drehzahl des Korbes einrichten, so dass eine kritische Grenze für die Zentrifugalkraft nicht überschritten wird.

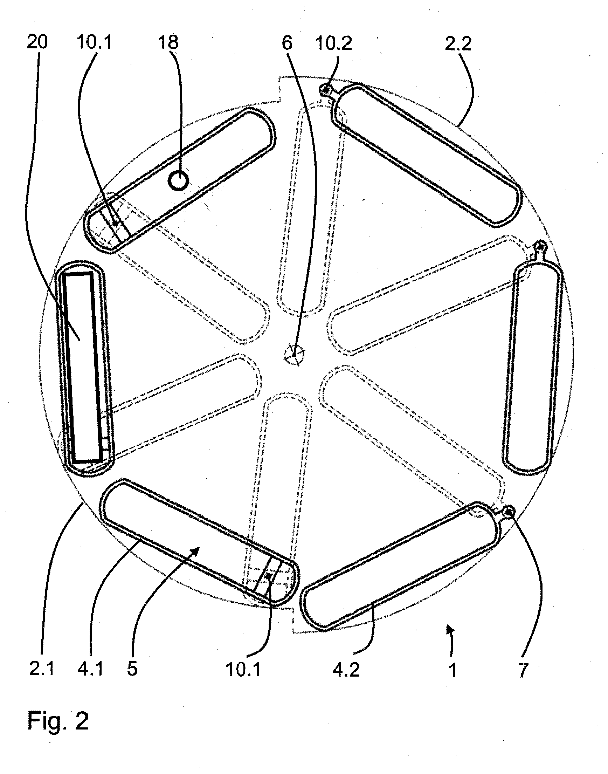

Die Messvorrichtungen 17 können mit unterschiedlichen physikalischen Messverfahren arbeiten. So ist beispielhaft in Fig. 1 ein Sensor 21 zur Ermittlung des Trägheitsmomentes vorgesehen, aus dessen Messwert sich das Gewicht der Wabe rechnerisch ermitteln lässt. Oder als alternatives oder zusätzliches Verfahren ist in Fig. 2 beispielhaft ein Kraft- oder Gewichtssensor 18 in der Aufnahme 4, 4.1 angebracht, der zum Beispiel als piezoelektronischer Aufnehmer seine Messdaten auch drahtlos übertragen kann. Oder als drittes aber für die Erfindung nicht abschließendes Beispiel ist in Fig. 3 ein Winkelmesser vorgesehen, der den Ausschlag der Aufnahme 4, 4.1 aufgrund der Zentrifugalkraft gegen die Kraft der Rückstelleineinrichtung 24 bestimmt und somit auch das Gewicht anzeigen kann. Der Ausschlagwinkel kann auch über optoelektronische Verfahren ermittelt werden.

In jedem dieser möglichen Messverfahren zur Bestimmung der Gewichtsänderung der Waben können vor einem Schleudervorgang die Sensoren auf den leeren oder den mit Waben in den Aufnahmen gefüllten Korb kalibriert werden.

Bevorzugt werden die Gewichts- bzw. Massenveränderungen von mindestens zwei oder sogar allen Waben verfolgt. Dann wird das System sicherer und außerdem können auch Unwuchten des Korbes besser erfasst werden.

In der Steuereinheit 15 ist eine maximale Drehzahl in Abhängigkeit des Wabengewichtes bzw. der Wabengewichtsverteilung hinterlegt. Auf einem Monitor 16 kann der Betreiber der Honigschleuder beispielsweise den genauen Verlauf der Drehzahlveränderung verfolgen.

In der Fig. 2 ist in sehr anschaulicher Art und Weise bei einer Selbstwendeschleuder mit sechs Aufnahmen der große Vorteil sichtbar gemacht worden, wenn man die Rotationsachse 10.1 der Aufnahme (4, 4.1) durch den Aufnahmeraum (5) der Aufnahmen (4, 4.1) verlaufen lässt. Dies ist explizit auf der linken Bildhälfte dargestellt. Im Gegensatz dazu zeigt die rechte Bildhälfte, wie die Rotationsachse 10.2 im Stand der Technik angeordnet war. Um in einheitlicher Sprache zu sprechen haben die Teile gemäß der Erfindung hier den Index ".1" und die Teile aus dem Stand der Technik den Index ".2" erhalten.

Durch die Versetzung der Rotationsachse 10.1 in den Bereich durch den Aufnahmeraum 5 kann man den Behälter 2.1 mit deutlich kleinerem Durchmesser bauen, als wenn man die Rotationsachse 10.2 am äußersten Ende der Aufnahme 4.2 und außerhalb des Aufnahmeraums unterbringt. In der Realität heißt das für den Behälter einer Selbstwendhonigschleuder mit sechs Aufnahmen, dass sich der Durchmesser von beispielsweise 770 mm auf 680 mm verringert. Das vermindert den Platzbedarf und den Materialbedarf (Edelstahl) erheblich. In gestrichelter Weise ist die Ruhestellung der Aufnahmen 4.1, 4.2 gezeigt.

Fig. 3a und Fig. 3b zeigen, wie es möglich gemacht wird, statt einer durchgängigen Drehachse 7 eine Art Hohlwelle 22 zu nutzen, denn eine durchgängige Drehachse wäre nicht möglich, da die Aufnahmen 4, 4.1 nicht mehr mit Waben befüllt werden könnten. Dazu zeigt Fig. 3a eine geschnittene Draufsicht auf die Aufnahme 4 und die Hohlwelle 22 und Fig. 3b einen Schnitt A-A durch die Hohlwelle 22 und den Aufnahmeraum 5.

Man erkennt, dass das Drehlager 13 und die Drehachse 11 unterhalb des Aufnahmeraums 5 der Aufnahme 4.1 angeordnet ist, so dass die Rotationsachse 10.1, der Aufnahme 4.1 im Zentrum der Hohlwelle 22 liegt. Dadurch liegt die Rotationsachse etwa gleich weit von zwei Längsseiten und einer Stirnseite der Aufnahme 4.1 entfernt.

Die in dem Drehlager 13 enthaltene Rückstelleinrichtung 24, beispielsweise eine Feder, und die Winkelmesseinrichtung 19 (nur durch einen Pfeil für das abgegebene Messsignal symbolisiert) sind nur angedeutet.

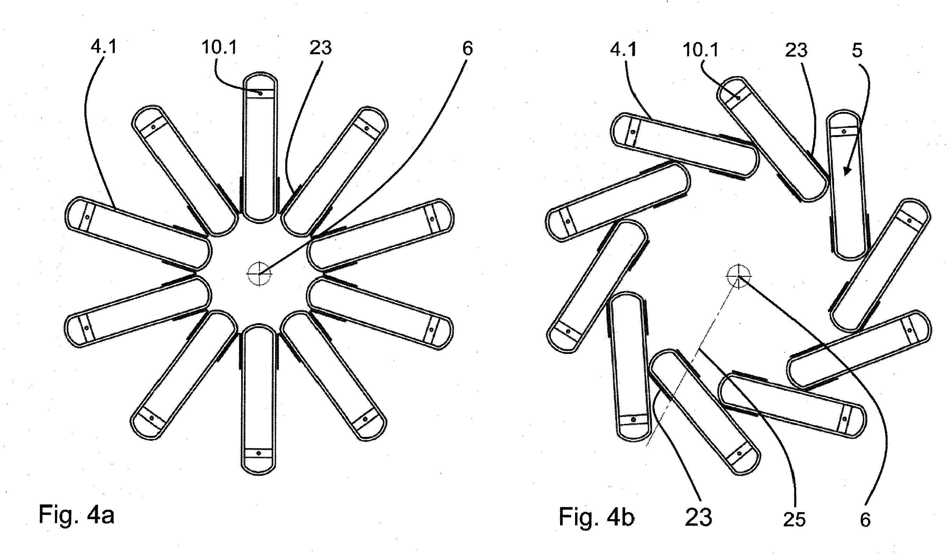

Schließlich zeigen Fig. 4a und Fig. 4b schematisch die gleiche Selbstwendeschleuder mit zehn Aufnahmen 4.1 in stehendem (Fig. 4a) und in drehendem (Fig. 4b) Zustand. Alle Aufnahmen drehen um die Rotationsachse 6 des Korbes, der hier zur Vereinfachung und zum besseren nicht dargestellt ist. Hier wurden die Rotationachsen 10.1 enger zueinander angeordnet, so dass ihr Abstand geringer ist als die längste Ausdehnung des Aufnahmeraums 5. Das hat zur Folge, dass die Aufnahme 4.1 auch bei einem durch die Zentrifugalkraft bedingten vollständigen Schwenk nicht mit beiden Enden den gleichen Abstand zur benachbarten Aufnahme geschleudert wird, sind im Überlappungsbereich Ableitbleche 23 angeordnet.

Durch die Darstellung der radialen Hilfsline 25, die eine Zentrifugalkraftrichtung ausgehend von der Rotationsachse 6 darstellt, wird deutlich, dass das Ableitblech 23 bezogen auf die Hilfsline genau an oder nahe der Hilfslinie endet, wo die Hilfslinie das Ende der nächsten Aufnahme passiert. Der ausgeschleuderte Honig kann sich also nicht an der nächsten Aufnahme, die näher an der Behälterinnenwand liegt, absetzen. Das wird möglich, weil das Ableitblech nur den Teil der Aufnahme 4.1 abdeckt, wo sich im Aufnahmeraum vornehmlich das (Holz-)Rähmchen der Wabe befindet.

Mit dieser Überlappung der Aufnahmen 4.1, die zusätzlich zur Verlegung der Rotationsachse 10.1 jeder Aufnahme 4.1 erfolgt, kann der im vorangehenden Beispiel mit 6 Aufnahmen pro Selbstwendeschleuder notwendige Durchmesser des Behälters tatsächlich beibehalten werden, so dass die Ausbeute pro Schleudergang (noch einmal) um über 60% erhöht wird.

**Bezugszeichenliste**

| | |
|---|---|
| 1 | Honigschleuder |
| 2, 2.1, 2.2 | Behälter |
| 3 | Korb |
| 4 | Aufnahme |
| 4, 4.1, 4.2 | Aufnahme |
| 5 | Aufnahmeraum |
| 6 | Rotationsachse Korb |
| 7 | Drehachse Korb |
| 8 | Antrieb |
| 9 | Motor |
| 10 | Rotationsachse Aufnahme |
| 10.1, 10.2 | Rotationsachse Aufnahme |
| 11 | Drehachse Aufnahme |
| 12 | Auslassöffnung |
| 13 | Drehlager |
| 14 | Behälter- Innenwand |
| 15 | Steuerungseinheit |
| 16 | Monitor |
| 17 | Messvorrichtung |
| 18 | Gewichtssensor, Kraftsensor |
| 19 | Winkelmesseinrichtung |
| 20 | Wabe |
| 21 | Sensor zur Ermittlung des Trägheitsmomentes |
| 22 | Hohlwelle |
| 23 | Ableitblech |
| 24 | Rückstelleineinrichtung |
| 25 | Hilfslinie |

## Patentansprüche

1. Honigschleuder mit einem Behälter(2), in dem ein drehbarer Korb (3) mit Aufnahmen (4, 4.1, 4.2) für Honigwaben und einer Rotationsachse (6) in Drehung versetzbar ist, wobei jede Aufnahme (4, 4.1, 4.2) einen Aufnahmeraum (5) aufweist, drehgelagert ist und je nach Drehrichtung des Korbes (3) in zwei Richtungen schwenkbar ist,
und der Behälter (2) eine Auslassöffnung (12) aufweist, aus der der ausgeschleuderte gewonnene Honig entnehmbar ist
und wobei die Honigschleuder einem Antrieb (8) für die Rotation des Korbes (3) aufweist,
**dadurch gekennzeichnet, dass**
die Rotationsachse (10.1) der Aufnahmen (4, 4.1) durch den Aufnahmeraum (5) der Aufnahmen (4, 4.1) verläuft.

2. Honigschleuder gemäß Anspruch 1, **dadurch gekennzeichnet, dass** sich ein Drehlager (13) für die Aufnahme (4, 4.1) unterhalb des Aufnahmeraums (5) befindet.

3. Honigschleuder gemäß Anspruch 1 oder 2, **dadurch gekennzeichnet, dass** die Aufnahme (4, 4.1) zumindest teilweise in einer Hohlwelle (22) untergebracht ist.

4. Honigschleuder gemäß einem der Ansprüche 1 bis 3, **dadurch gekennzeichnet, dass** die Rotationsachse (10.1) der Aufnahme (4, 4.1) von drei Seiten der Aufnahme wenigstens nahezu gleich weit entfernt ist.

5. Honigschleuder gemäß einem der Ansprüche 1 bis 4, **dadurch gekennzeichnet, dass** der Abstand von zwei Rotationsachsen (10.1) von zwei Aufnahmen (4.1, 4.2) kürzer als die größte Länge des Aufnahmeraums (5) ist.

6. Honigschleuder gemäß einem der Ansprüche 1 bis 4, **dadurch gekennzeichnet, dass** ein Ableitblech (15) zumindest in einem Überlappungsbereich von zwei Aufnahmen (4.1, 4.2) vorgesehen ist.

7. Honigschleuder gemäß einem der Ansprüche 1 bis 6, **dadurch gekennzeichnet, dass** eine Messvorrichtung (17) vorgesehen ist, dessen Messwerte Aufschluss über das Gewicht der Wabe (20) geben.
